# EUROPEAN PATENT APPLICATION

(11) **EP 4 840 320 A1**
(43) Date of publication of application: **18.11.2026**
(21) Application number: 25212320.3
(22) Date of filing: 30.10.2025
(51) Int. Cl.: A23K 10/20, A23K 10/22, A23K 10/26, A23K 10/30, A23K 40/30, A23K 50/40, A23K 50/42, A23P 10/28

(54) **MULTI-COMPONENT FUNCTIONAL FEED FORMULA COMPOSITION**

(30) Priority: 16.05.2025 TW 114118481
(71) Applicant: Ko, Chien-Chang, Kaohsiung City (TW)
(72) Inventor: Ko, Chien-Chang, Kaohsiung City (TW)
(74) Representative: Horak, Michael

(57) **Abstract**

A multi-component functional feed formula composition includes a base portion (1) and an additive portion (2). The base portion (1) is formed of fish powder, meat powder, or a mixture thereof. The additive portion (2) is formed of functional components selected as one or more of lingzhi (Ganoderma), Antarctic krill, cranberry, collagen peptides, blueberry, turmeric root, eggshell membrane, Trametes versicolor, chaga, white button mushroom, and Agaricus blazei, which are subjected to formulation classification and combination design according to nutrition requirements for gut, skin, joint, and immune. The components of the additive portion (2) show functionally complementary and can be selected and combined according to product positioning, and can be used in combination with different structural arrangements for applications in dry-type feed products to provide multifunctional nutritional supplementation and application flexibility.

## Description

### TECHNICAL FIELD OF THE INVENTION

The present invention relates to feed formula combination technology, and more particularly to a multi-component functional feed formula composition suitable for applications of daily nutritional supplementation for pets such as dogs and cats. The formula composition comprises a variety of functional components that can be used in combination and is designed and combined to meet different nutritional needs, making it suitable for the manufacture and development of dry-type feed products.

### DESCRIPTION OF THE PRIOR ART

Currently, most dry-type feed products for dogs and cats on the market are designed as a formula for a single nutritional objective, such as focusing on protein supplementation, skin and coat maintenance, or gastrointestinal regulation, and are difficult to simultaneously address multiple nutritional needs and functional support. Although some of the feed products are added with functional additives during the manufacturing process, these additions are often one-off enhancements, lacking overall combination planning and classification logic, resulting in a lack of synergy of the components and also making it difficult to ensure the combination ratio and stability of each functional component in the pellets.

### SUMMARY OF THE INVENTION

The primary objective of the present invention is to provide a multi-component functional feed formula composition. The composition is suitable for daily feeding of pets, such as dogs and cats, and provides an effect of multifunctional nutritional support. Compared to the existing feed products, which are designed mostly around a single nutritional objective, the present invention makes a combination of multiple components that exhibit effects of specific nutritional support, so that a single pellet can simultaneously cover various nutritional aspects, including gut function, joint mobility, skin and coat maintenance, and physiological defense, and thus, enhancing application completion and market value of the product.

The feed formula composition of the present invention comprises a base portion and an additive portion, wherein the base portion is composed of powder deriving from fish or meat to provide protein and main nutritional sources; the additive portion is composed of one or more of lingzhi (Ganoderma), Antarctic krill, cranberry, collagen peptides, blueberry, turmeric root, eggshell membrane, Trametes versicolor, chaga, white button mushroom, and Agaricus blazei, and users can select among these components for grouping and combination according to formulation needs in order to form a nutritional supplement formula designed for targeted functions.

To provide the additive portion with better formulation flexibility and design versatility in practical applications, the present invention further discloses a functional classification design method for each of components, including: cranberry for supporting gut health; collagen peptides and blueberry for skin and hair care; eggshell membrane and turmeric root for supporting joint health; and lingzhi (Ganoderma), Trametes versicolor, and chaga for balance of physiological defense functions. Furthermore, to comply with regulatory restrictions in different markets, Trametes versicolor can be replaced with white button mushrooms, and chaga can be replaced with Agaricus blazei to maintain composition stability and commercialization flexibility.

The feed formula composition according to the present invention is designed by combining one or more of the components listed in the claims and the ratio of each of the functional components in the combination can be adjusted based on actual product requirements, with the addition range being between 10 mg and 1,000 mg per kilogram of feed, so as to achieve various formulation applications of general daily health care type, specialized functional supplement type, and staged nutrition type. Through such a design manner of combination logics and classification design, the present invention enhances the design flexibility and application diversity of functional feed products, and improves the nutritional coverage and absorption efficiency for daily feeding.

In summary, through design and combination of multiple components having functional nutrition effects according to classification logics, and forming a formula composition with flexible combination and stable percentages in a feed pellet, the present invention not only provides nutritional support for gut health, skin and coat care, joint maintenance, and physiological defense as desired, but is also extendable to formulation applications of daily health care type, specialized functional supplement type, and staged nutrition type in response to the need for market tiering, thereby enhancing product development flexibility and the overall nutritional benefits of pet feeding.

Furthermore, the components of the additive portion of the present invention are combinable according to individual objectives of nutritional supplementation, such that the components achieve functional complementarity and application synergy. For example, joint use of cranberry and Antarctic krill can help address both gut function and immune regulation; and combination of collagen peptides and turmeric root can simultaneously support joint tissue and antioxidant protection. Through such a logic of formulation complementarity and synergy, feed pellets can simultaneously provide diversified nutritional supplementation, and improve the integration and stability of actual feeding results.

### BRIEF DESCRIPTION OF THE DRAWINGS

FIG. 1 is a conceptual diagram of the present invention.
FIG. 2 is a structural diagram of a first embodiment of the present invention.
FIG. 3 is a structural diagram of a second embodiment of the present invention.
FIG. 4 is a structural diagram of a third embodiment of the present invention.
FIG. 5 is a structural diagram of a fourth embodiment of the present invention.

### DETAILED DESCRIPTION OF THE PREFERRED EMBODIMENT

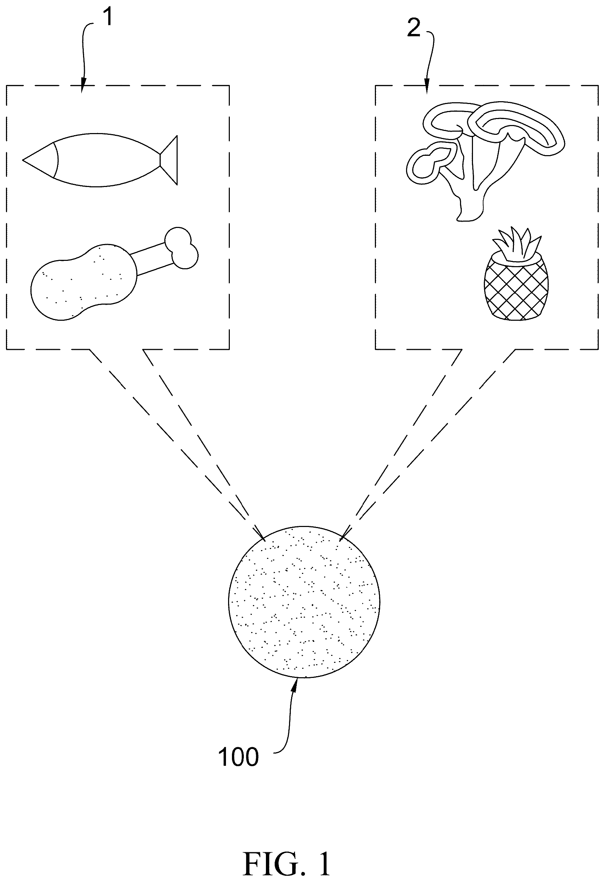

As shown in FIG. 1, the present invention provides a multi-component functional feed formula composition 100, of which formula design and combination are made on a base portion 1 and an additive portion 2. The base portion 1 can be selected from fish powder, meat powder, or a mixture thereof to provide a main nutritional source and a pellet structure. The additive portion 2 comprises a composition that contains a functional raw material, which is selected as one or more of lingzhi (Ganoderma), Antarctic krill, cranberry, collagen peptides, blueberry, turmeric root, eggshell membrane, Trametes versicolor, chaga, white button mushroom, and Agaricus blazei.

Combination design of the additive portion 2 is made according to functional classification. For example, cranberry is used for gut support; collagen peptides and blueberry are used for skin and hair care; eggshell membrane and turmeric root support joint health; and lingzhi (Ganoderma), Trametes versicolor, and chaga can be used for balance of physiological defense functions. To meet regulatory restrictions or market demands, Trametes versicolor can be replaced with white button mushrooms, and chaga can be replaced with Agaricus blazei to provide a stable formula alternative.

The components of the additive portion according to the present invention are combinable according to each individual objective of nutritional supplementation, such that the components achieve function complementarity and application synergy. For example, joint use of cranberry and Antarctic krill can help address both gut function and immune regulation; and combination of collagen peptides and turmeric root can simultaneously support joint tissue and antioxidant protection. Through such a formula logic of complementarity and synergy, feed pellets can simultaneously provide diversified nutritional supplementation, and improve the integration and stability of actual feeding results.

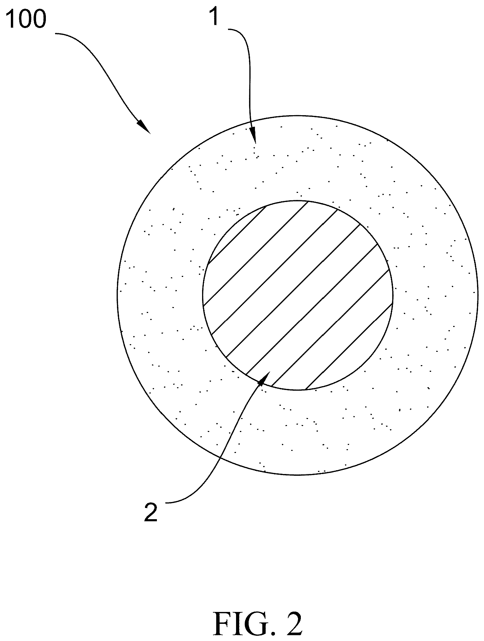

As shown in FIGS. 2-5, the base portion 1 and the additive portion 2 may take various structural arrangements for loading and processing integration. Specifically, one of the following arrangement modes can be taken for fabrication of the feed pellets:
As shown in FIG. 2, a schematic view is provided to show an embodiment of the present invention, depicting a multi-component functional feed pellet having a coated structure, wherein the additive portion 2 is located in the interior of the pellet, while the outer layer is formed of the base portion 1.

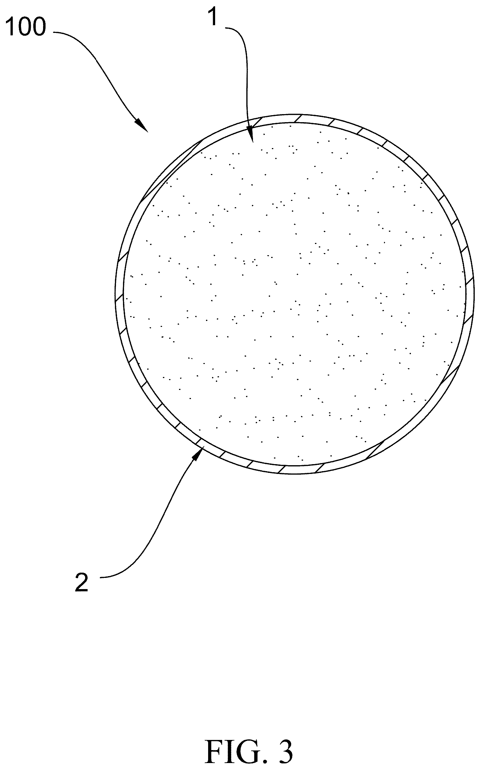

As shown in FIG. 3, a schematic view is provided to show an embodiment of the present invention, depicting a multi-component functional feed pellet having a reverse-coated structure, wherein the base portion 1 in located in the interior, while the additive portion 2 is coated outside to form an outer encapsulating structure.

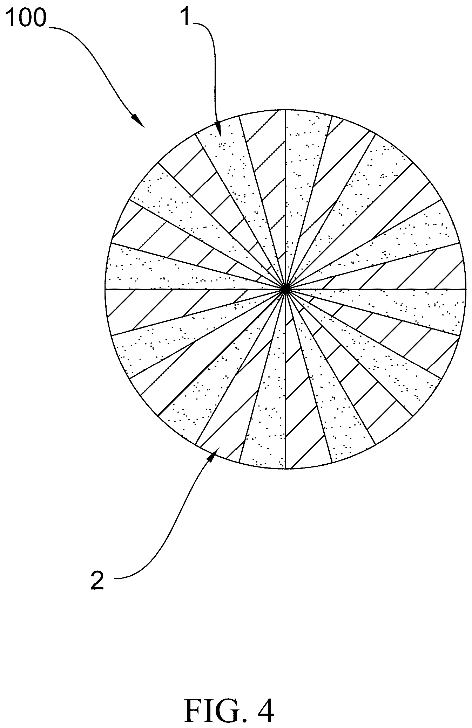

As shown in FIG. 4, a schematic view is provided to show an embodiment of the present invention, depicting a multi-component functional feed pellet having a mixed structure, wherein the base portion 1 and the additive portion 2 are arranged in a mixed form in the pellet, forming a nonhomogeneous distribution structure.

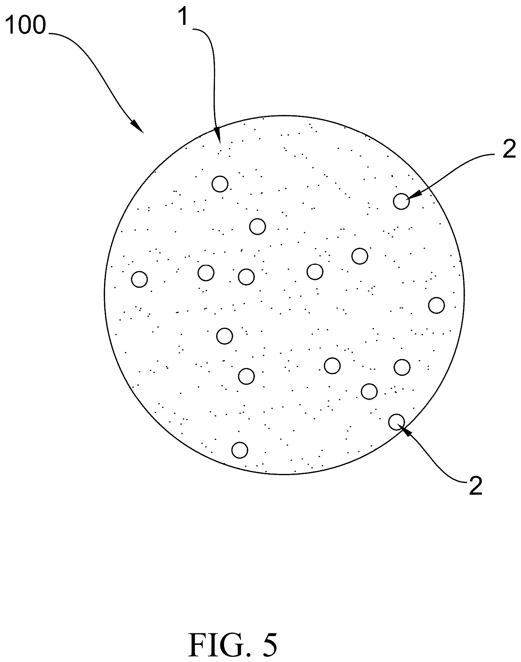

As shown in FIG. 5, a schematic view is provided to show an embodiment of the present invention, depicting a multi-component functional feed pellet having an embedded structure, wherein the base portion 1 forms a body of the pellet, while the additive portion 2 is pre-formed as microparticles dispersedly embedded in the interior of the body.

The various structural arrangements described above can be selectively used, based on processing conditions, raw material properties, and product design requirements, and are not limited to any specific combination modes. In practice, zoned loading may be made according to functional stratification requirements, such as applying zoned arrangement of different functional additive components through a microparticle form, or a compaction step may be adopted to ensure stability and absorption efficiency of the components.

The feed formula composition according to the present invention can also be used in a variety of combinations of feed components and structures to design products that meet different nutritional needs of pets. For example, the functional formula contained in the additive portion may include one that has one of the following effects: improving intestinal peristalsis, promoting digestion and absorption, modulating gut microbiota, improving skin and coat luster, maintaining joint function, strengthening immunity, protecting the urinary system, or delaying aging. Designing of selection and combination can be performed according to product positioning and target subjects to achieve the overall application benefits of multifunctional nutritional supplementation.

## Claims

1. A multi-component functional feed formula composition, comprising a base portion (1) and an additive portion (2), wherein the base portion (1) is formed of fish powder, meat powder, or a mixture thereof to provide a main nutritional source;
the additive portion (2) comprises a composition that is formed of one or more of lingzhi (Ganoderma), Antarctic krill, cranberry, collagen peptides, pineapple, blueberry, turmeric root, eggshell membrane, Trametes versicolor, chaga, white button mushroom, and Agaricus blazei; and
the composition is a multi-component compound formula designed to promote balance of daily metabolic functions and nutritional supplementation for pets.

2. The multi-component functional feed formula composition according to claim 1, wherein the pineapple and cranberry are components for gut function protection; the collagen peptides and blueberry are components for skin and hair care; the eggshell membrane and the turmeric root are components for joint care.

3. The multi-component functional feed formula composition according to claim 1, wherein each component of the additive portion (2) is added to feed pellets at a ratio of 10 mg/kg to 1000 mg/kg.

4. The multi-component functional feed formula composition according to claim 1, wherein the Trametes versicolor is replaced with white button mushrooms, and the chaga is replaced with Agaricus blazei.
